# EUROPÄISCHE PATENTSCHRIFT

(11) **EP 0 775 376 B1**
(45) Veröffentlichungstag und Bekanntmachung des Hinweises auf die Patenterteilung: **26.08.1998**
(21) Anmeldenummer: 95930442.9
(22) Anmeldetag: 07.08.1995
(51) Int. Cl.: H01S 3/04

(54) **LASERSYSTEM MIT EINER KOMPENSIERTEN OPTIK**
LASER SYSTEM WITH COMPENSATED OPTICS
SYSTEME LASER A DISPOSITIF OPTIQUE COMPENSE

(30) Priorität: 09.08.1994 DE 4428194
(43) Veröffentlichungstag der Anmeldung: 28.05.1997
(73) Patentinhaber: ROFIN-SINAR LASER GmbH, 22113 Hamburg (DE)
(72) Erfinder: FRIEDE, Dirk, D-21244 Buchholz (DE); HAGE, Hermann, D-21033 Hamburg (DE); HERZNER, Karl-Heinz, D-22175 Hamburg (DE); SCHOLZ, Volker, D-23554 Lübeck (DE)
(74) Vertreter: Tergau, Dietrich, Dipl.-Ing.
(86) Internationale Anmeldenummer: EP9503134
(87) Internationale Veröffentlichungsnummer: WO9605637

(56) Entgegenhaltungen:
- US-A- 5 181 215
- PATENT ABSTRACTS OF JAPAN vol. 14, no. 316 (E-949) (4259) 6. Juli 1990 & JP,A,02 105 483 (TOSHIBA) 18. April 1990

## Beschreibung

Die Erfindung bezieht sich auf ein Lasersystem mit einer kompensierten Optik.

Optische Elemente, insbesondere Spiegel die sich innerhalb eines Lasersystems befinden, werden bei Hochleistungslasern aufgrund der hohen Leistungsdichte im Laserstrahl thermisch hoch belastet. In der Regel ist daher eine Kühlung der Spiegel notwendig. Im Spiegel entstehen somit Temperaturgradienten, die zu einer unerwünschten thermischen Verbiegung des Spiegels führen. Insbesondere gilt dies für die Resonatorspiegel von Hochleistungslasern, da einerseits die Belastung dieser Spiegel aufgrund des Resonator-Transmissionsgrades, der typisch zwischen 10 und 50 % beträgt, bei vorgegebener Laserleistung wesentlich höher ist als bei den außerhalb des Resonators angeordneten Spiegeln Zum anderen ist die zulässige Verformung der Resonatorspiegel um Größenordnungen kleiner als bei Spiegeln, die im Strahlengang außerhalb des Resonators liegen.

Lasersysteme mit sogenannten adaptiven Optiken zur Kompensation der thermischen Verformung der optischen Komponenten sind beispielsweise aus den deutschen Offenlegungsschriften 39 00 467, 42 12 779 und 42 36 355 bekannt. Bei dem in der DE 3900 467 A offenbarten Laserspiegelkopf ist auf der Rückseite eines Spiegels ein Hohlraum vorgesehen, der mit Druck beaufschlagt werden kann, so daß sich die Geometrie des Spiegels ändert. Bei der aus der DE 42 36 355 A1 bekannten Lösung wird ein Membranspiegel mit einem Piezoelement als Aktuator verstellt. In der DE 42 12 779 A1 sind im Resonator eines Festkörperlasers Flüssigkristallzellen angeordnet, deren optische Abbildungseigenschaften elektrisch gesteuert werden können. Die bekannten Einrichtungen sind jedoch technisch aufwendig und kostenintensiv.

Bei ebenen diffusionsgekühlten Bandleiter-CO₂-Lasern, wie sie beispielsweise aus der US-A-4,719,639 bekannt sind, wirkt sich die große Ausdehnung der Resonatorspiegel, die sich über die gesamte Breite der Elektroden erstrecken, zusätzlich ungünstig auf ihre thermisch verursachte Verbiegung aus. Die Resonatorgeometrie wird gestört und es kommt zu Veränderungen des Strahlprofils und der Strahllage. Bei bekannten Bandleiterlasern werden deshalb ausschließlich Spiegel eingesetzt, bei denen die Wärmeeinbringung durch möglichst hochreflektierende Beschichtungen minimiert wird. Die Herstellung solcher Schichten ist jedoch in der Regel aufwendig. Außerdem verlieren sie im Betrieb durch unvermeidliche Verschmutzung ihre günstigen Reflexionseigenschaften.

Der Erfindung liegt nun die Aufgabe zugrunde, ein Lasersystem anzugeben, bei dem die vorstehend genannten Nachteile vermieden sind.

Die genannte Aufgabe wird gelost mit den Merkmalen des Patentanspruches 1. Ein Lasersystem mit einer kompensierten Optik gemäß der Erfindung enthält wenigstens ein optisches Element, das zur Kompensation einer durch den Laserstrahl hervorgerufenen Verformung der im Strahlengang des Lasersystems angeordneten optischen Elemente mit einer Wärmequelle thermisch gekoppelt ist. Durch die thermische Kopplung einer möglichst trägheitsarmen Wärmequelle mit wenigstens einem der im Strahlengang des Lasersystems angeordneten optischen Elemente ist es möglich, die durch die Laserstrahlung verursachte Verformung der optischen Komponenten, insbesondere die Verbiegung der Resonatorspiegel zu kompensieren.

Gegenüber den im Stand der Technik bekannten adaptiven Optiken, bei denen eine solche Kompensation der Verformung oder Verbiegung durch eine Piezo-Verstellung oder durch einen regulierbaren Flüssigkeits- oder Gasdruck oder durch Flüssigkristallzellen vorgenommen wird, ist der gemäß der Erfindung thermisch kompensierte Spiegel einfacher und preisgünstiger aufzubauen. Darüber hinaus ist sein Einsatz im HF-Bereich unproblematisch.

Zur Kompensation der Verformung können eines oder mehrere der imresonatorinternen oder im resonatorexternen Strahlengang von Hochleistungslasern angeordneten optische Elemente mit einer Wärmequelle thermisch gekoppelt werden. Vorzugsweise sind dies die im Strahlengang des Lasers angeordneten Spiegel, insbesondere die metallischen Resonatorspiegel von koaxialen oder ebenen Bandleiterlasern.

Es hat sich außerdem herausgestellt, daß in vielen Anwendungsfällen die thermische Kompensation eines einzigen Resonatorspiegels genügt, um die durch den Laserstrahl induzierte thermische Verformung aller im Strahlengang angeordneter optischer Elemente zu kompensieren.

Insbesondere ist die Wärmequelle auf der Rückseite eines im Strahlengang des Lasersystems angeordneten Spiegels angeordnet und in ihrer geometrischen Form an die vom Laserstrahl bestrahlte Fläche des Spiegels angepaßt.

Vorzugsweise sind zur thermischen Kompensation Mittel vorgesehen, die einen vorgegebenen Anteil des erzeugten Laserlichtes auf eine an der Rückseite des Spiegels angeordnete absorbierende Schicht lenken. Diese absorbierende Schicht wirkt dann als Wärmequelle.

In einer vorteilhaften Ausführungsform ist als Wärmequelle zur thermischen Kompensation wenigstens ein auf der Rückseite oder auf der Vorderseite des Spiegels angeordnetes resistives Heizelement vorgesehen.

In einer weiteren bevorzugten Ausführungsform sind Mittel vorgesehen, mit denen ein Teil einer zur Anregung des Hochleistungslasers verwendeten Hochfrequenzleistung ausgekoppelt und zur elektrischen Versorgung des Heizelementes verwendet wird.

In einer weitern vorteilhaften Ausgestaltung der Erfindung ist das Heizelement an eine abhängig von der Laserleistung steuerbare Spannungsquelle angeschlossen.

Die Erfindung findet ihre bevorzugte Anwendung bei den totalreflektierenden metallischen Resonatorspiegeln von Hochleistungslasern, insbesondere Bandleiterlasern, sowie bei den Umlenkspiegeln des externen Strahlengangs von Hochleistungslasern.

Zur weiteren Erläuterung der Erfindung wird auf die Ausführungsbeispiele der Zeichnung verwiesen, in deren
- FIG 1 und 2: ein Teil des Resonators eines Hochleistungs-Bandleiterlasers gemäß der Erfindung in einer Seitenansicht bzw. einer Draufsicht schematisch dargestellt ist. In
- FIG 3: ist eine weitere vorteilhafte Ausführungsform der Erfindung in einer Seitenansicht veranschaulicht.
- FIG 4 und 5: zeigen jeweils einen Resonator eines Bandleiterlasers mit einem thermisch kompensierten Resonatorspiegel in einer Draufsicht.
- In FIG 6 und 7: sind jeweils weitere vorteilhafte Ausgestaltungen von Bandleiterlasern mit thermisch kompensierten Resonatorspiegeln dargestellt.

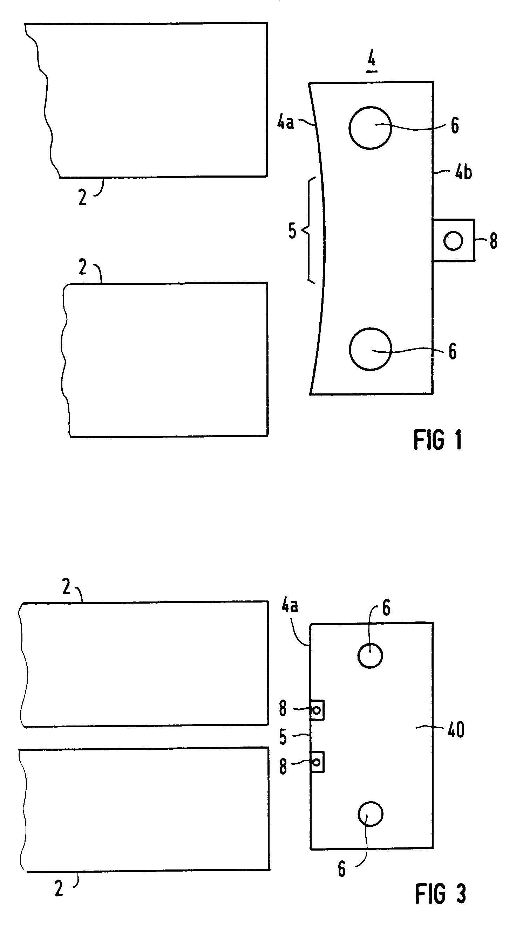

Gemäß **FIG 1** enthält ein Hochleistungs-Bandleiterlaser zwei voneinander beabstandete plattenförmige Elektroden 2, an deren Stirnseiten jeweils ein Resonatorspiegel 4 angeordnet ist, der in einer Ebene senkrecht zu den Flachseiten der Elektroden 2 eine konkav gekrümmte Spiegelfläche 4a hat. Die Elektroden 2 bilden einen hohlen Bandleiter mit einer rechteckigen Stirnfläche, aus der das Laserlicht austritt. Das austretende Laserlicht trifft in einer Zone 5 auf die Spiegelfläche 4a auf und bewirkt dort einen lokalen Wärmeeintrag. Im Resonatorspiegel 4 sind Kanäle 6 zum Hindurchleiten von Kühlwasser angeordnet. Der Resonatorspiegel 4 ist thermisch an eine Wärmequelle gekoppelt. Hierzu ist im Ausführungsbeispiel der Figur unmittelbar auf der Rückseite 4b des Resonatorspiegels 4 als Wärmequelle ein resistives Heizelement 8 angeordnet. Vorzugsweise ist ein Mantelheizleiter vorgesehen, mit dem ein besonders guter thermischer Kontakt zum Resonatorspiegel 4 hergestellt werden kann. Der Mantelheizleiter kann beispielsweise an der Rückseite 4b des Resonatorspiegels 4 angelötet oder in eine dort befindliche Nut eingelegt und in dieser Nut verstemmt sein. Dadurch wird der Wärmeübergang erhöht und die thermische Trägheit der Kompensation verringert.

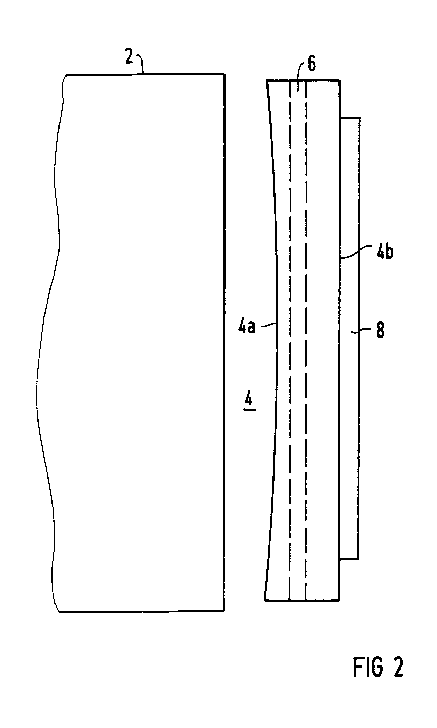

Die Wärmeeinbringung auf der Rückseite 4b des Resonatorspiegels 4 erfolgt vorzugsweise in einem Bereich, der in seiner geometrischen Form dem auf den Resonatorspiegel auftreffenden Strahlprofil entspricht und gegenüber der Zone 5 angeordnet ist. Im Falle eines ebenen Bandleiterlasers ist dies, wie es in **FIG 2** zu erkennen ist, ein sich parallel zur Stirnseite der Elektroden 2 erstreckende lineares Heizelement 8, die durch einen einzigen Mantelheizleiter realisiert werden kann. Bei einem koaxialen Bandleiterlaser ist in analoger Weise ein ringförmiges Heizelement 8, beispielsweise ein zu einem Ring geformter Mantelheizleiter vorgesehen. Die elektrische Leistung, die zur Kompensation der thermischen Verformung des Spiegels 4 mit dem Heizelement 8 zugeführt werden muß, ist etwa in der Größenordnung wie die vom Resonatorspiegel 4 auf der Spiegelfläche 4a absorbierte Leistung. Dies sind bei einem 2kW-Laser etwa 50-100W.

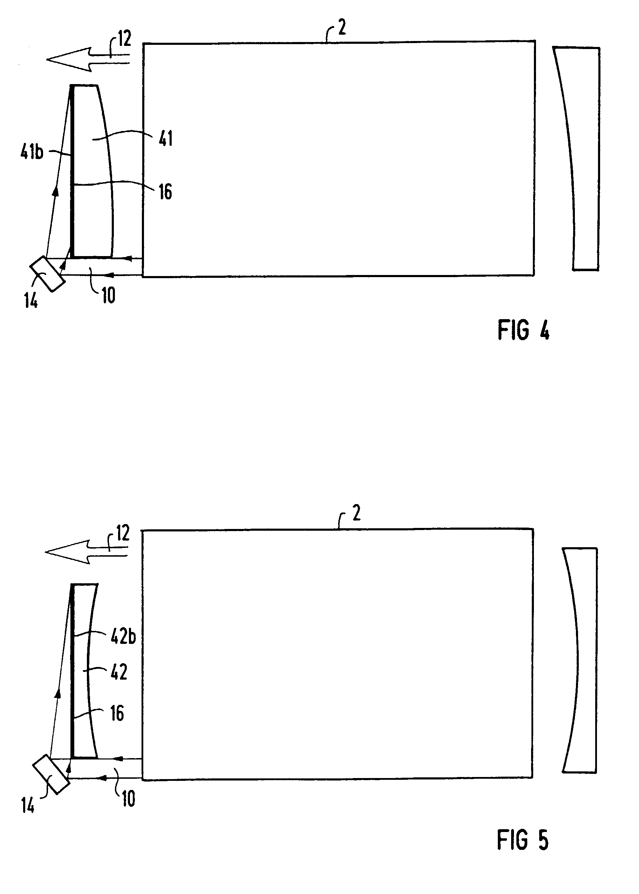

In der Ausführungsform gemäß **FIG 3** enthält ein Resonatorspiegel 40 an seiner den Elektroden 2 zugewandten Vorderseite 40a zwei Heizelemente 8, die oberhalb und unterhalb der vom Laserlicht beaufschlagten Zone 5 angeordnet sind. Bei den Heizelementen 8 handelt es sich beispielsweise um zwei in Nuten eingestemmte Mantelheizleiter, die sich parallel zur Längskante der zwischen den Elektroden 2 befindlichen Austrittsfläche für das Laserlicht erstrecken. In dieser Ausführungsform wird die den Heizelementen 8 zugeführten Leistung so gesteuert, daß die Summe der dem Resonatorspiegel 40 durch das Laserlicht und die Heizelemente 8 zugeführten Leistung konstant gehalten wird. Der Resonatorspiegel 40 wird damit auch bei ausgeschalteten Laser thermisch vorgespannt. Durch entsprechende Reduzierung der elektrisch zugeführten Leistung kann dann die zusätzlich durch das Laserlicht eingebrachte Wärmeleistung kompensiert werden, so daß die Spannungen im Resonatorspiegel 40 konstant bleiben.

Im Ausführungsbeispiel gemäß **FIG 4** wird ein Teil 10 der im Resonator erzeugten Strahlung ausgekoppelt und zur Beheizung der Rückseite 41b eines konvex gekrümmten Resonatorspiegels 41 verwendet. Bei dem dargestellten Resonator handelt es sich um einen instabilen Resonator des positiven Zweigs, bei dem ein Laserstrahl 12 am Rand des Resonatorspiegels 41 aus dem Resonator austritt. An der dem Austrittsfenster für den Laserstrahl 12 gegenüberliegenden Seite erstreckt sich der Resonatorspiegel 41 ebenfalls nicht bis zum Rand der plattenförmigen Elektroden 2, so daß dort ebenfalls ein Teil 10 des innerhalb des Resonators erzeugten Laserlichtes austritt. Der austretende Teil 10 wird durch einen Umlenkspiegel 14 auf eine an der Rückseite 41b des Resonatorspiegels 41 angeordnete absorbierende Schicht 16 geführt.

Das Ausführungsbeispiel gemäß **FIG 5** zeigt einen instabilen Resonator des negativen Zweigs, bei dem ebenfalls ein Teil 10 der im Resonator erzeugten Srahlung zur Beheizung der Rückseite 42b eines konkav gekrümmten Resonatorspiegels 42 verwendet wird.

Die absorbierende Schicht 16 dient in den Ausführungsbeispielen nach Figuren 4 und 5 als Wärmequelle zur Kompensation der thermischen Verformung der im Strahlengang des Laserlichtes bedfindlichen optischen Komponenten.

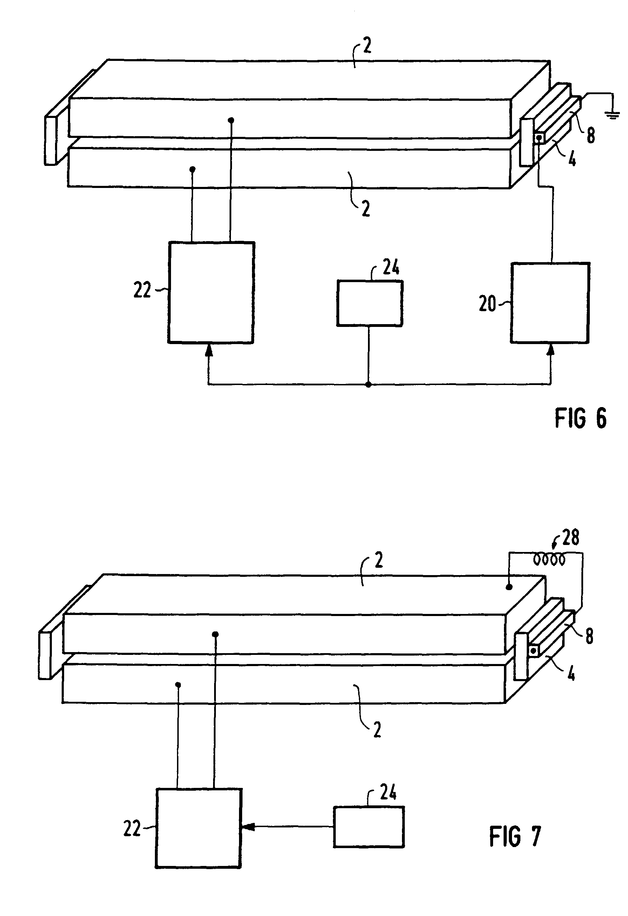

Gemäß **FIG 6** erfolgt in einer weiteren Ausführungsform der Erfindung die Heizung des an der Rückseite des Resonatorspiegels 4 angebrachten resistiven Heizelementes 8 durch eine externe Gleich - oder Wechselspannungsquelle 20, insbesondere ein Transduktor oder Magnetverstärker. Zur Versorgung der Elektroden 2 ist ein Hochfrequenzgenerator 22 vorgesehen, dessen Leistungsabgabe von einer Steuereinrichtung 24 gesteuert wird. Diese Steuereinrichtung 24 steuert außerdem entsprechend dieser Leistungsabgabe, beispielsweise über ein mit der Laserleistung korreliertes, vorzugsweise gesiebtes Gleichspannungssignal die Spannungsquelle 20 und die Heizleistung des Heizelementes 8.

Als Wechselspannungsquelle 20 kann auch eine bereits vorhandene Netzwechselspannung verwendet werden, die durch eine an sich bekannte Phasenanschnittsteuerung in Abhängigkeit von der Laserleistung angeschnitten wird und über einen Transformator dem Heizelement 8 zugeführt wird.

In einer weiteren bevorzugten Ausführungsform ist zur Spannungsversorgung des Heizelementes 8 eine durch Gleichrichtung der Netzwechselspannung erzeugte und mit dem Gittertaktsignal einer die Hochfrequenz erzeugenden Röhre modulierte Gleichspannung vorgesehen. Diese modulierte Gleichspannung ist dann automatisch proportional zur Laserleistung und kann gegebenenfalls über eine Transformator an das Heizelement angelegt werden. Insbesondere ist vor der Modulation eine Stabilisierung der durch Netzgleichrichtung erzeugten Spannung vorgesehen, um die dem Heizelement 8 zugeführte Heizleistung unabhängig von zufälligen Netzschwankungen zu machen.

Im Ausführungsbeispiel gemäß **FIG 7** wird die den Elektroden 2 vom Hochfrequenzgenerator 22 zugeführte Hochfrequenzleistung zur Versorgung des Heizelementes 8 benutzt. Hierzu ist das Heizelement über einen Hochfrequenzspannungsteiler 28 zwischen die Elektroden 2 geschaltet. Auf diese Weise wird ein Teil der zur Anregung des Lasers verwendeten HF-Leistung ausgekoppelt und zur Beheizung des Resonatorspiegels 4 verwendet. Dadurch ist die Heizleistung automatisch proportional zur Laserleistung und damit proportional zu der am Spiegel reflektierten Leistung.

## Patentansprüche

1. Lasersystem mit einer kompensierten Optik, die wenigstens ein optisches Element (4, 40, 41, 42) enthält, das zur Kompensation einer durch den Laserstrahl hervorgerufenen Verformung der im Strahlengang des Lasersystems angeordneten optischen Elemente mit einer Wärmequelle (8, 14, 16) thermisch gekoppelt ist.

2. Lasersystem nach Anspruch 1, bei dem die Wärmequelle (8, 14, 16) thermisch mit wenigstens einem Spiegel (4, 40, 41, 42) gekoppelt ist.

3. Lasersystem nach Anspruch 2, bei dem die Wärmequelle (8, 14, 16) thermisch mit einem Resonatorspiegel (4, 40, 41, 42) gekoppelt ist.

4. Lasersystem nach einem der vorhergehenden Ansprüche, bei dem als Wärmequelle zur thermischen Kompensation wenigstens ein resistives Heizelement (8) vorgesehen ist.

5. Lasersystem nach Anspruch 4, bei dem das Heizelement (8) auf der Rückseite eines im Strahlengang des Lasersystems angeordneten Spiegels (4) angeordnet ist.

6. Lasersystem nach Anspruch 4, bei dem das Heizelement (8) auf der Vorderseite eines im Strahlengang des Lasersystems angeordneten Spiegels (40) angeordnet ist.

7. Lasersystem nach einem der Ansprüche 4 bis 6, bei dem Mittel (28) vorgesehen sind, mit denen ein Teil einer zur Anregung des Hochleistungslasers verwendeten Hochfrequenzleistung ausgekoppelt und zur elektrischen Versorgung des Heizelementes (8) verwendet wird.

8. Lasersystem nach einem der Ansprüche 4 bis 6, bei dem das Heizelement (8) an eine abhängig von der Laserleistung steuerbare Spannungsquelle (20) angeschlossen ist.

9. Lasersystem nach Anspruch 2 oder 3, bei dem Mittel (14) vorgesehen sind, die einen vorgegebenen Anteil des erzeugten Laserlichtes auf eine an der Rückseite (41b, 42b) eines im Strahlengang des Lasersystems angeordneten Spiegels (41 bzw. 42) angeordnete absorbierende Schicht (16) lenken.

## Claims

1. Laser system having a compensated optical system, which contains at least one optical element (4, 40, 41, 42) which is thermally coupled to a heat source (8, 14, 16) in order to compensate a deformation of the optical elements arranged in the beam path of the laser system, which deformation is caused by the laser beam.

2. Laser system according to claim 1, in which the heat source (8, 14, 16) is thermally coupled to at least one mirror (4, 40, 41, 42).

3. Laser system according to claim 2, in which the heat source (8, 14, 16) is thermally coupled to a resonator mirror (4, 40, 41, 42).

4. Laser system according to one of the preceding claims, in which at least one resistive heating element (8) is provided as a heat source for the thermal compensation.

5. Laser system according to claim 4, in which the heating element (8) is arranged on the rear side of a mirror (4) which is arranged in the beam path of the laser system.

6. Laser system according to claim 4, in which the heating element (8) is arranged on the front side of a mirror (40) which is arranged in the beam path of the laser system.

7. Laser system according to one of the claims 4 to 6, in which there are provided means (28) with which a portion of the high-frequency energy used to excite the high-power laser is tapped and used for the electrical supply of the heating element (8).

8. Laser system according to one of the claims 4 to 6, in which the heating element (8) is connected to a voltage source (20) which can be controlled as a function of the laser energy.

9. Laser system according to claim 2 or 3, in which there are provided means (14) which direct a specified portion of the laser light which is generated onto an absorbing layer (16) arranged on the rear side (41b, 42b) of a mirror (41 or 42 respectively) arranged in the beam path of the laser system.

## Revendications

1. Système laser à dispositif optique compensé, qui comporte au moins un élément (4,40,41,42) optique qui, pour compenser une déformation, provoquée par le rayon laser, des éléments optiques montés dans le trajet des rayons du système laser, est couplé du point de vue thermique à une source (8,14,16) de chaleur.

2. Système laser suivant la revendication 1, dans lequel la source (8,14,16) de chaleur est couplée du point de vue thermique à au moins un miroir (4,40,41,42).

3. Système laser suivant la revendication 2, dans lequel la source (8,14,16) de chaleur est couplée du point de vue thermique à un miroir (4,40,41,42) de la cavité.

4. Système laser suivant l'une des revendications précédentes, dans lequel il est prévu comme source de chaleur pour la compensation thermique au moins un élément (8) chauffant résistif.

5. Système laser suivant la revendication 4, dans lequel l'élément (8) chauffant est monté sur la face arrière d'un miroir (4) monté dans le trajet des rayons du système laser.

6. Système laser suivant la revendication 4, dans lequel l'élément (8) chauffant est monté sur la face avant d'un miroir (40) monté dans le trajet des rayons du système laser.

7. Système laser suivant l'une des revendications 4 à 6, dans lequel il est prévu des moyens (28) par lesquels une partie d'une puissance haute fréquence utilisée pour exciter le laser à grande puissance est découplée et utilisée pour l'alimentation électrique de l'élément (8) chauffant.

8. Système laser suivant l'une des revendications 4 à 6, dans lequel l'élément (8) chauffant est raccordé à une source (20) de tension pouvant être commandée en fonction de la puissance du laser.

9. Système laser suivant la revendication 2 ou 3, dans lequel il est prévu des moyens (14) qui dirigent une part prescrite de la lumière de laser produite sur une couche (16) absorbante disposée sur la face (41b,42b) arrière d'un miroir (41 et 42) monté dans le trajet des rayons du système laser.
